# EUROPÄISCHE PATENTSCHRIFT

(11) **EP 3 198 241 B1**
(45) Veröffentlichungstag und Bekanntmachung des Hinweises auf die Patenterteilung: **18.05.2022**
(21) Anmeldenummer: 15757276.9
(22) Anmeldetag: 02.09.2015
(51) Int. Cl.: G01F 1/74, G01F 1/00, G01F 15/00, G01F 15/08, F25B 1/00, G01F 1/34, G01F 1/68

(54) **MESSANORDNUNG ZUR BESTIMMUNG DER STRÖMUNGSGESCHWINDIGKEIT EINES FLUIDES MIT EINER FLÜSSIGEN PHASE UND EINER GASPHASE**
MEASURING DEVICE FOR DETERMINING THE FLOW RATE OF A FLUID COMPRISING A LIQUID PHASE AND A GAS PHASE
DISPOSITIF DE DETERMINATION DU DÉBIT D'UN FLUIDE COMPRENANT UNE PHASE LIQUIDE ET UNE PHASE GAZEUSE

(30) Priorität: 25.09.2014 DE 102014113898
(43) Veröffentlichungstag der Anmeldung: 02.08.2017
(73) Patentinhaber: Endress+Hauser Flowtec AG, 4153 Reinach (CH)
(72) Erfinder: HÖCKER, Rainer, 79761 Waldshut (DE); POPP, Oliver, CH-4104 Oberwil (CH)
(74) Vertreter: Andres, Angelika Maria
(86) Internationale Anmeldenummer: PCT/EP2015/070015
(87) Internationale Veröffentlichungsnummer: WO 2016/045918

(56) Entgegenhaltungen:
- CN-B- 101 929 884
- DE-A1-102011 103 175
- JP-A- 2000 320 933
- US-A- 5 127 272
- US-A1- 2009 229 375

## Beschreibung

Die vorliegende Erfindung betrifft eine Messanordnung zur Bestimmung der Strömungsgeschwindigkeit zumindest einer Einzelphase eines Dampfes und ein Verfahren zur Ermittlung eines Durchflusses von Einzelphasen eines Dampfes.

Bei der Messung der Strömungsgeschwindigkeit und des Durchflusses von Dampf, beispielsweise Wasserdampf, kann es zu einer sogenannten Filmströmung kommen, bei welcher sich Flüssigkeit an der Messrohrwandung absetzt und dort einen Flüssigkeitsfilm umfangsverteilt ausbildet. Dieser Flüssigkeitsfilm bzw. diese Wandströmung stört bei der Durchflussmessung bzw. wird bei der Messung nicht erfasst.

Der Stand der Technik beispielsweise gegeben durch die CN101929884B zeigt ein Durchflussmessgerät zur Messung eines Zwei-Phasen-Mediums, wobei jede einzelne Phase über separate, U-förmige Umleitungsrohre einem Durchflussmessgerät 5, 10 zugeführt wird. Der zur Zuführung notwendige Druck wird dabei über eine Blende 11 zur Erzeugung eines Differenzdrucks über die Umleitungsrohre erzeugt.

Die US20090229375A1 offenbart ein Verfahren und ein System zur Bestimmung einer Durchflussrate eines Zwei-Phasen-Mediums in einer Rohrleitung, wobei aus Signalreflektionen eines Ultraschallsignals an einer Rohrleitungs-Medium-Grenzfläche sowie einer Flüssigkeit-Gas-Grenzfläche auf einen Füllstand des Messrohrs zurückgeschlossen wird, siehe Figs. 6 und 8.

Die DE102011103175A1 lehrt eine Messvorrichtung zum Messen eines Durchflusses eines durch das Messrohr hindurchströmenden einphasigen Fluids.

Dabei nimmt der Innendurchmesser des Messrohres in Richtung des Messabschnittes kontinuierlich zu und nach dem Messabschnitt in Richtung Auslass wieder kontinuierlich ab. Dies dient zur Vermeidung von Wirbeln und Rückflüssen in dem Fluid

Die vorliegende Erfindung setzt bei der Aufgabe an eine Messanordnung bereitzustellen, welche eine Strömungsgeschwindigkeitsmessung von zumindest einer Einzelphase des Dampfes mit geringerer Störung ermöglicht.

Diese Aufgabe wird durch die in Anspruch 1 definierte Messanordnung gelöst.

Erfindungsgemäß soll eine Messanordnung zur Bestimmung der Strömungsgeschwindigkeit zumindest einer Flüssigphase und/oder einer Gasphase eines Dampfes oder eines aus einer flüssigen und einer gasförmigen Phase bestehenden Fluides oder eines überkritischen Fluids bereitgestellt werden. Diese weist ein Messrohr auf, an oder in welchem zumindest ein Sensorelement zumindest eines ersten Durchflussmessgerätes angeordnet ist. Dieses Sensorelement ist Teil eines Durchflussmessgerätes und ermöglicht die Bestimmung der Flüssigphase oder der Gasphase oder eines aus einer flüssigen und einer gasförmigen Phase bestehenden Fluides oder eines überkritischen Fluids.

Weiterhin erfindungsgemäß weist das Messrohr zumindest einen Einströmbereich und einen Ausströmbereich auf, wobei zwischen diesen beiden Bereichen ein Mittelbereich angeordnet ist, dessen Messrohrquerschnitt einen größeren Flächeninhalt aufweist als der Flächeninhalt des Messrohrquerschnitts des Ausströmbereichs oder des Einströmbereiches.

Weiterhin erfindungsgemäß steigt der Messrohrquerschnitt in einem ersten Überführungsbereich zwischen Einströmbereich und Mittelbereich sowie in einem zweiten Überführungsbereich zwischen Ausströmbereich und Mittelbereich zum Mittelbereich hin kontinuierlich an. Dabei ist das Sensorelement im Mittelbereich angeordnet. Für eine günstige Positionierung des Sensorelementes weist der Mittelbereich des Messrohres einen Gerinnekanal zur Sammlung der Flüssigphase auf. Durch die Sammlung der Flüssigphase in einem Kanal können auch geringe Flüssigkeitsmengen hinreichend genau detektiert werden.

Durch den vergrößerten Querschnitt wird der Dampf verlangsamt und flüssige Bestandteile können vollständig in einem Gerinne am Boden des Messrohres überführt werden. Somit kann der Dampf in eine Flüssigphase und eine Gasphase getrennt werden und die Flüssigkeit in den unteren Bereich des Messrohres transportiert werden. Jede Phase kann einzeln hinsichtlich ihrer Strömungsgeschwindigkeit gemessen werden. Störende umfangsverteilte Flüssigkeitsfilme, welche eingangs beschrieben wurden, treten dabei nicht auf. In einer Weiterbildung der Erfindung weist das Messrohr der Messanordnung im eingebauten Zustand eine Orientierung auf, bei dem der Einströmbereich und der Ausströmbereich im wesentlichen auf gleicher Höhe bezüglich der Schwerkraft angeordnet sind. Insbesondere verläuft eine gerade Verbindungslinie zwischen den Schnittpunkten der Messrohrmittellinie mit einer Stirnfläche des Messrohrs am Einströmbereich und einer Stirnfläche des Messrohrs am Ausströmbereich waagerecht, bzw. die Verbindungslinie weicht von der Waagerechten um nicht mehr als 20° insbsondere nicht mehr als 10° ab.

Vorteilhafte Ausgestaltungen der Erfindung sind Gegenstand der Unteransprüche.

Es ist von Vorteil, wenn am oder im Messrohr zusätzlich zu dem in Anspruch 1 definierten Sensorelement zumindest ein weiteres Sensorelement angeordnet ist, welches jeweils die Strömungsgeschwindigkeit der zweiten Einzelphase misst. Dadurch können die Strömungsgeschwindigkeiten der Einzelphasen des Dampfes erfasst werden. Dabei ist die Strömungsgeschwindigkeit der Flüssigphase oftmals geringer als die Strömungsgeschwindigkeit der Gasphase.

Das Sensorelement kann Teil des ersten Durchflussmessgerätes sein. Dies ist z.B. bei einem Ultraschall-Durchflussmessgerät mit mehreren Ultraschallwandlerpaaren der Fall. Dadurch kann eine kompakte Bauweise realisiert werden. Es ist allerdings auch möglich, in einer Messanordnung zwei oder mehr separate Durchflussmessgeräte vorzusehen. In beiden Fällen ermöglicht die die Messanordnung eine Messung der Strömungsgeschwindigkeit sowohl der Flüssigphase oder Flüssigphasen als auch der Gasphase.

Es ist zudem möglich eine Durchflussmessung zu realisieren. Hierfür kann man die Messanordnung um einen Füllstandssensor oder einen Grenzstandsensor ergänzen, welcher eine Bestimmung des Füllstandes oder eine Anzeige eines erreichten Grenzstandes der Flüssigphase im Messrohr ermöglicht. Damit ist das Volumen der Flüssigkeitsanteils und des Gasanteils ermittelbar und bei bekannter Dichte deren Massenanteile.

Der Mittelbereich des Messrohres weist ein Gasleitungsrohrsegment auf. Dieses ermöglicht die günstige Positionierung der Sensorelemente. Das Gasleitungsrohrsegment befindet sich in einem in Lotrichtung L oberen Bereich des Messrohres und weist einen höheren Flächeninhalt auf als der Gerinnekanal.

Das Messrohr kann ohne Weiteres in eine bestehende Anlage integriert werden, Hierfür ist das Messrohr jeweils endständig an einer Prozessleitung, vorzugsweise mittels einer Flanschverbindung, anschließbar.

Insgesamt kann die Messanordnung in besonders kompakter Bauweise vorteilhaft realisiert werden, indem sie zumindest ein Sensorelement aufweist, welches in einem oberen Bereich des Messrohres zur Bestimmung der Strömungsgeschwindigkeit des Gases angeordnet ist; zumindest ein Sensorelement aufweist, welches in einem unteren Bereich des Messrohres zur Bestimmung der Strömungsgeschwindigkeit der Flüssigkeit angeordnet ist und indem zumindest ein Sensorelement zur Bestimmung des Füllstandes der zumindest einen Flüssigkeit im Messrohr vorgesehen ist und dass eine Auswerteeinheit, welche den Durchfluss der zumindest zwei Einzelphasen ermittelt und welche mit den Sensorelementen verbunden ist. Die Verbindung kann durch Kabel oder auch durch eine Funkverbindung erfolgen. Dabei benötigt nicht jedes Sensorelement eine extra Auswerteeinheit sondern alle Sensorsignale können durch eine einzige Auswerteeinheit verwaltet werden.

Weiterhin umfasst ein Verfahren zur Ermittlung eines Durchflusses von Einzelphasen eines Dampfes, die folgenden Schritte:
a) Einleiten des Dampfes in das Messrohr einer Messanordnung, welches zumindest einen Einström- und einen Mittelbereich aufweist, wobei der Einströmbereich einen Querschnitt mit kleinerem Flächeninhalt als der Mittelbereich aufweist,
   und wobei sich der Dampf im Messrohr in zumindest eine Flüssigphase und eine Gasphase aufteilt
b) Ermittlung der Strömungsgeschwindigkeiten der einzelnen Phasen
c) Ermittlung des Füllstandes der Flüssigphase oder der Flüssighasen im Messrohr
d) Berechnung des Durchflusses der Einzelphasen unter Berücksichtigung der ermittelten Strömungsgeschwindigkeiten und des Füllstandes.

Dadurch wird eine Durchflussmessung der Einzelkomponenten von Dampf ermöglicht.

Nachfolgend wird der Gegenstand der Erfindung anhand mehrerer Ausführungsbeispiele und unter Zuhilfenahme von Zeichnungen näher erläutert. Es zeigen:
Fig. 1 Perspektivansicht eines Messrohr einer erfindungsgemäßen Vorrichtung zur Bestimmung der Strömungsgeschwindigkeit und/oder eines Durchflusses von Dampf;
Fig. 2 Schnittansicht eines schematischen Aufbaus einer ersten Variante einer erfindungsgemäßen Vorrichtung;
Fig. 3 Schnittansicht eines schematischen Aufbaus einer zweiten Variante einer erfindungsgemäßen Vorrichtung.

Die vorliegende Erfindung betrifft vorrangig die Messung der Einzelphasen von Dampfströmungen. Dabei kann es sich z.B. um Wasserdampf handeln. Allerdings kommen auch andere kondensierte Gase, wie Kohlenwasserstoffverbindungen in Betracht. Dabei kann es sich insbesondere um Flüssigkeiten handeln, die gedacht sind, sich zu verflüssigen oder zu kondensieren. Eine typische Anwendung derartiger Fluide findet sich in einem Kühlschrank. Weiterhin kann die Erfindung auch bei nicht kondensierten Gasen angewandt werden, in welchen eine zweite, flüssige Phase vorhanden sind.

Derartige Dämpfe weisen eine Froude-Zahl von kleiner als 1 auf und einen Lockhart-Martinelli-Parameter von kleiner als 0,3. Jedwede Strömung oberhalb dieser Parameter ist als Flüssigkeit mit Luftblasen zu verstehen.

In Dampfleitungen ist es für den Anwender sehr hilfreich die Dampfqualität zu bestimmen. Diese ergibt sich aus dem Anteil der Gesamtmasse geteilt durch den Anteil der Masse an Dampf. Diese Messaufgabe kann mittels eines Diffusors gelöst werden, welcher die Strömung aufgrund der Erhöhung des Messrohrquerschnitts entlang der Messrohrachse verlangsamt.

Dieser Diffusor selbst stellt zugleich das Messrohr dar und weist Sensorelemente einer Messanordnung auf, welche die Strömungsgeschwindigkeit und/oder den Durchfluss der Einzelphasen bestimmen.

Durch die Nennweitenvergrößerung innerhalb des Messrohres 5 bildet sich unabhängig vom Betriebszustand in der angrenzenden Prozessleitung eine Gerinneströmung aus einer flüssigen Phase aus. Geht man davon aus, dass entweder der Gesamtmassenstrom oder der Dampfmassenstrom separat gemessen werden kann, so ermöglicht dies die Bestimmung der Dampfqualität.

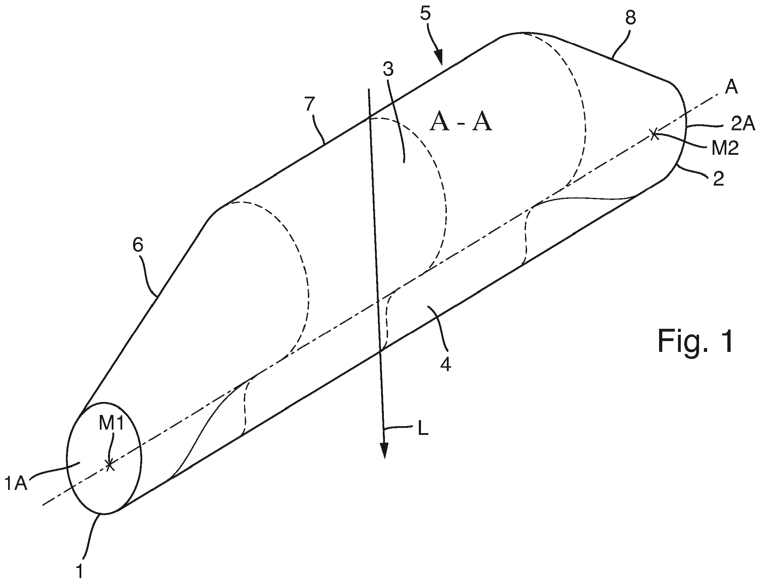

Fig. 1 zeigt schematisch ein Messrohr 5 für eine Trennung eines Dampfgemisches in eine Gasphase ϕ₁ und eine Flüssigphase ϕ₂. Das Messrohr 5 weist einen Einströmbereich 1 auf, mit einer Einlauföffnung 1A. Weiterhin weist das Messrohr einen Ausströmbereich 2 auf, mit einer Auslauföffnung 2A. Die Einlauföffnung 1A und die Auslauföffnung 2A weisen jeweils einen Mittelpunkt M1 und M2 auf. Die Strecke zwischen diesen Mittelpunkten M1 und M2 ist die Messrohrachse A.

Die Querschnittsform der Einlauföffnungen 1A und 2A ist entweder kreisrund oder oval. Im Verlauf der Messrohrachse A von den Mittelpunkten M1 zu M2 ändert sich die Querschnittsform. Es erfolgt zudem eine Aufweitung des Querschnitts, das heißt der Flächeninhalt des Querschnitts nimmt zu.

Die Querschnittsform des Messrohres 5 ändert sich derart, dass in einem in Lotrichtung L unteren Bereich des Messrohres 5 ein Gerinnekanal 4 angeordnet ist, in welchem sich die flüssige Phase sammelt. In einem in Lotrichtung L oberen Bereich des Messrohres 5 befindet sich ein Gasleitungsrohrsegment 3. Das Gasleitungsrohrsegment 3 weist dabei einen wesentlich höheren Flächeninhalt auf als der Gerinnekanal 4.

Das in Fig. 1 dargestellte Messrohr 5 unterteilt sich in einen Einströmbereich 1, in einen ersten Überführungsbereich 6, in einen Mittelbereich 7, in einen zweiten Überführungsbereich 8 und in einen Ausströmbereich 2, welche nachfolgend näher erläutert werden.

Der Einströmbereich 1 weist einen Messrohrquerschnitt auf, welcher kreisrund oder oval ist. Insbesondere kann sich bereits im Einströmbereich 1 die Form des Messrohrquerschnitts gegebenenfalls sprunghaft ändern. So kann vor der Einlauföffnung 1A ein zum Einströmbereich 1 zugehöriger Rohrabschnitt angeordnet sein, welcher einen Flansch zum Anschluss an ein Prozessrohr aufweist. In analoger Weise kann auch ein Ausströmbereich 2 einen vorbeschriebenen Rohrabschnitt aufweisen.

Innerhalb des ersten und des zweiten Überführungsbereichs 6 und 8 ändert sich der Messrohrquerschnitt in seiner Form und in seinem Flächeninhalt, wobei der Flächeninhalt bis zum Mittelbereich 7 kontinuierlich ansteigt oder kontinuierlich abfällt.

Im Mittelbereich 7 weist das Messrohr 5 über diesen gesamten Bereich einen einheitlichen Messrohrquerschnitt mit dem besagten Gerinnekanal 4 und dem Gasleitungsrohrsegment 3.

In Fig. 1 weist das Gasleitungsrohrsegments 3 eine rohrbogenförmige Außenkontur auf und der Gerinnekanal 4 eine u-förmige Außenkontur. Beide Außenkonturen gehen dabei ineinander über.

Die in Fig. 1 abgebildete Form eines Messrohres 5 ist jedoch lediglich eine bevorzugte von mehreren Ausführungsvarianten. So ist es beispielsweise auch denkbar, dass das Mittelsegment 7 dreieckig ausgebildet ist, wobei eine Dreiecksspitze den Gerinnekanal 2 ausbildet.

Durch die Erweiterung des Flächeninhalts des Messrohrquerschnitts im Verlauf der Messrohrachse A wird eine Entmischung der Dampfphase in eine Gas- und eine Flüssigphase erreicht.

Der Gerinnekanal 4 ermöglicht eine ausreichende Füllhöhe an Flüssigkeit um eine Durchflussmessung vorzunehmen,

Zur Realisierung der Durchflussmessung der Gasphase und der Flüssigphase können an sich bekannte Durchflussmesstechniken genutzt werden. Entsprechende Durchflussmesstechniken für Gase sind beispielsweise eine Ultraschall-Durchflussmessung, eine thermische Durchflussmessung, eine Vortex-Durchflussmessung, eine Differenzdruck-Durchflussmessung oder eine Durchflussmessung anhand eines sogenannten "V-cone".

Der Durchfluss der Flüssigphase kann beispielsweise mittels magnetisch-induktiver Durchflussmessung, Ultraschallmesstechnik oder Differenzdruckmessung erfolgen.

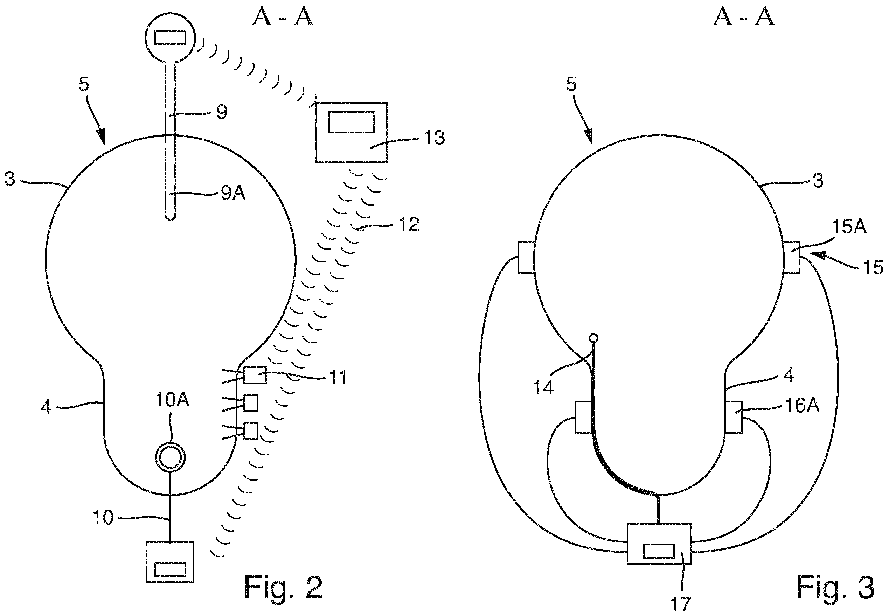

Hierfür sind in Fig. 2 und 3 zwei Kombinationsvarianten dargestellt.

Fig. 2 ist eine schematische Darstellung eines Schnitts des Mittelsegments 7 des Messrohres 5. Sie zeigt eine Anordnung eines thermischen Durchflussmessgerätes 9 und eines Differenzdruckmessgerätes 10 bzw. eine Anordnung der Sensorelemente 9A und 10A dieser Durchflussmessgeräte am Messrohr 5. Dabei misst das Differenzdruckmessgerät 10 die Strömungsgeschwindigkeit der Flüssigphase ϕ₂ und das thermische Durchflussmessgerät 9 misst die Strömungsgeschwindigkeit der Gasphase ϕ₁.

Um zusätzlich einen Durchfluss zu bestimmen muss das Volumen der Flüssigkeit im Gerinnekanal 4 ermittelt werden. Dies kann beispielsweise über Grenzstandsensoren z.B. Vibrationsgrenzschalter 11 oder alternativ durch Lichtschranken erfolgen.

Alternativ kann auch eine Füllstandsmessung erfolgen. Hierfür kann im oberen Bereich des Messrohres 5 ein Ultraschallsensor angeordnet sein, welcher den Füllstand durch Laufzeiterfassung ermittelt. Eine weitere Möglichkeit der Füllstandsmessung bietet die Radarmessung. Es sind darüber hinaus auch andere Füllstandsmessmethoden bekannt.

Die Messwerte welche von dem thermischen Durchflussmessgerät 9, dem Differenzdruckmessgerät 10 und den Grenzstandsensoren 11 ermittelt werden können an eine Auswerteeinheit 13 übertragen werden. Dies erfolgt in Fig. 1 durch eine Drahtlose Funkverbindung 12.

Fig. 3 zeigt eine weitere Variante der Einzelbestimmung der Gasphase ϕ₁ und der Flüssigphase ϕ₂ in dem Messrohr 5. Beide Phasen werden dabei durch Ultraschall-Durchflussmessung bestimmt. Die Bestimmung des Volumens an Flüssigkeit kann anhand eines kapazitiven Füllstandsmessgerätes erfolgen. Ein kapazitiver Messaufnehmer 14 ist in Fig. 3 mit einem Messtransmitter 17 verbunden. Die Ultraschallsensorelemente 15A und 16A eines Ultraschall-Durchflussmessgerätes 15, welche am Messrohr 5 angeordnet sind, sind ebenfalls mit dem Messtransmitter verbunden. Der Messtransmitter weist eine Auswerteeinheit auf, welcher die Messwerte auswertet und Werte bezüglich der Strömungsgeschwindigkeiten der Einzelphasen und/oder die Durchflusswerte der Einzelphasen ausgibt.

Besonders die kapazitive Füllstandsmessung und die Ultraschall-Füllstandsmessung ist von Vorteil bei der Messung eines Dreiphasengemisches, wobei bei Phasentrennung eine Gasphase und zwei nicht- oder nur begrenzt mischbare Flüssigkeiten auftreten. Die kapazitive Füllstandsmessung ermöglicht hier die Messung der Füllstandshöhen beider Flüssigkeiten und erlaubt damit eine Aussage bezüglich des Durchflusses jeder flüssigen Einzelphase.

In einer besonders bevorzugten Ausführungsvariante kann die Messvorrichtung zusätzlich um einen oder mehrere Temperatursensor ergänzt werden, zur Ermittlung der Temperatur der Flüssigphase und/oder der Gasphase.

Die Leerrohrgeschwindigkeiten der beiden Phasen sind durch die geometrischen Verhältnisse so anzupassen, dass sich für die flüssige Phase sicher eine Gerinneströmung einstellt

**Bezugszeichenliste**

| | | | |
|---|---|---|---|
| 1 | Einströmbereich | | |
| 1A | Einlauföffnung | | |
| 2 | Ausströmbereich | | |
| 2A | Auslauföffnung | | |
| 3 | Gasleitungsrohrsegment | | |
| 4 | Gerinnekanal | | |
| 5 | Messrohr | | |
| 6 | erster Übergangsbereich | | |
| 7 | Mittelbereich | | |
| 8 | zweiter Übergangsbereich | | |
| 9A | thermisches Durchfluss-Sensorelement | | |
| 9 | thermisches Durchflussmessgerät | | |
| 10A | Differenzdruck-Sensorelement | | |
| 10 | Differenzdruck-Durchflussmessgerät | | |
| 11 | Vibronikgrenzschalter | | |
| 12 | Wireless-Funkverbindung | | |
| 13 | Auswerteeinheit | | |
| 14 | kapazitives Füllstandsmessgerät | | |
| 15A | Ultraschallsensorelement | | |
| 15 | Ultraschall-Durchflussmessgerät | | |
| 16A | Ultraschallsensorelement | | |
| 17 | Auswerteeinheit | | |
| A | Messrohrachse | L | Lotrichtung |
| Φ₁ | Gasphase | Φ₂ | Flüssigphase |

## Patentansprüche

1. Messanordnung zur Bestimmung der Strömungsgeschwindigkeit zumindest einer Flüssigphase (ϕ₂) und/oder einer Gasphase (ϕ₁) eines Dampfes oder eines aus einer flüssigen und einer gasförmigen Phase bestehenden Fluides oder eines überkritischen Fluids,
wobei die Messanordnung ein Messrohr (5) aufweist, an oder in welchem zumindest ein Sensorelement (10A, 15A) zumindest eines ersten Durchflussmessgerätes (10, 15) angeordnet ist, zur Bestimmung der Flüssigphase (ϕ₂) oder der Gasphase (ϕ₁),
wobei das Messrohr (5) zumindest einen Einströmbereich (1) und einen Ausströmbereich (2) aufweist, wobei zwischen diesen beiden Bereichen ein Mittelbereich (7) angeordnet ist, dessen Messrohrquerschnitt einen größeren Flächeninhalt aufweist als der Flächeninhalt des Messrohrquerschnitts des Ausströmbereichs (2) oder des Einströmbereiches (1),
wobei der Messrohrquerschnitt in einem ersten Überführungsbereich (6) zwischen Einströmbereich und Mittelbereich sowie in einem zweiten Überführungsbereich (8) zwischen Ausströmbereich und Mittelbereich zum Mittelbereich hin kontinuierlich ansteigt,
wobei das Sensorelement im Mittelbereich (7) angeordnet ist,
**dadurch gekennzeichnet,**
**dass** der Mittelbereich (7) des Messrohres (5) einen Gerinnekanal (4) zur Sammlung der Flüssigphase (ϕ₂) aufweist.

2. Messanordnung nach Anspruch 1, **dadurch gekennzeichnet, dass** am oder im Messrohr (5) zumindest ein weiteres Sensorelement (9A, 16A) des ersten Durchflussmessgerätes (15) oder eines weiteren Durchflussmessgerätes (9) aufweist, so dass durch Messanordnung die Strömungsgeschwindigkeit der Flüssigphase (ϕ₂) oder der Gasphase (ϕ₁) bestimmbar ist.

3. Messanordnung nach Anspruch 1 oder 2, **dadurch gekennzeichnet, dass** die Messanordnung einen Füllstandssensor (14) oder einen Grenzstandsensor (11) aufweist zur Bestimmung des Füllstandes oder zur Anzeige eines erreichten Grenzstandes der Flüssigphase (ϕ₂) im Messrohr (5)

4. Messanordnung nach einem der vorhergehenden Ansprüche, **dadurch gekennzeichnet, dass** der Mittelbereich (7) des Messrohres (5) ein Gasleitungsrohrsegment (3) aufweist, wobei sich das Gasleitungsrohrsegment (3) in einem in Lotrichtung L oberen Bereich des Messrohres (5) befindet, wobei das Gasleitungsrohrsegment (3) einen höheren Flächeninhalt aufweist als der Gerinnekanal (4).

5. Messanordnung nach einem der vorhergehenden Ansprüche, **dadurch gekennzeichnet, dass** das Messrohr (5) jeweils endständig an eine Prozessleitung, vorzugsweise mittels einer Flanschverbindung, anschließbar ist.

6. Messanordnung nach einem der vorhergehenden Ansprüche, **dadurch gekennzeichnet, dass** die Messanordnung
zumindest ein Sensorelement (9A, 15A) aufweist, welches in einem oberen Bereich des Messrohres (5) zur Bestimmung der Strömungsgeschwindigkeit des Gases angeordnet ist;
zumindest ein Sensorelement aufweist, welches in einem unteren Bereich des Messrohres zur Bestimmung der Strömungsgeschwindigkeit der Flüssigkeit angeordnet ist;
ein Sensorelement zur Bestimmung des Füllstandes der zumindest einen Flüssigkeit im Messrohr vorgesehen ist und
eine Auswerteeinheit, welche den Durchfluss der zumindest zwei Einzelphasen ermittelt und welche mit den Sensorelementen verbunden ist.

7. Messanordnung nach einem der vorhergehenden Ansprüche, **dadurch gekennzeichnet, dass** das Messrohr im eingebauten Zustand eine Orientierung aufweist, bei dem der Einströmbereich und der Ausströmbereich auf im wesentlichen auf gleicher Höhe bezüglich der Schwerkraft angeordnet sind.

8. Messanordnung nach einem der vorhergehenden Ansprüche, **dadurch gekennzeichnet, dass** eine gerade Verbindungslinie zwischen den Schnittpunkten der Messrohrmittellinie mit einer Stirnfläche des Messrohrs am Einströmbereich und einer Stirnfläche des Messrohrs am Ausströmbereich waagerecht verläuft, bzw. von der Waagerechten um nicht mehr als 20° insbesondere nicht mehr als 10° abweicht.

## Claims

1. Measuring arrangement designed to determine the flow velocity of at least a liquid phase (ϕ₂) and/or a gas phase (ϕ₁) of a steam or of a fluid consisting of a liquid phase and a gaseous phase or a supercritical fluid,
wherein the measuring arrangement comprises a measuring tube (5) on or in which at least a sensor element (10A, 15A) of at least a first flowmeter (10, 15) is arranged for the purpose of determining the liquid phase (ϕ₂) or the gas phase (ϕ₁), wherein the measuring tube (5) has at least one inflow section (1) and one outflow section (2), wherein a central section (7) is arranged between these two zones whose measuring tube cross-section has a larger surface than the surface of the measuring tube cross-section of the outflow section (2) or of the inflow section (1),
wherein the measuring tube cross-section increases in a continuous manner towards the central section in a first transition zone (6) between the inflow section and the central section and in a second transition zone (8) between the outflow section and the central section,
wherein the sensor element is arranged in the central section (7),
**characterized in that**
the central section (7) of the measuring tube (5) has a channel (4) for the collection of the liquid phase (ϕ₂).

2. Measuring arrangement as claimed in Claim 1, **characterized in that** at least an additional sensor element (9A, 16A) of the first flowmeter (15) or of another flowmeter (9) is located in or on the measuring tube (5) such that the flow velocity of the liquid phase (ϕ₂) or the gas phase (ϕ₁) can be determined by the measuring arrangement.

3. Measuring arrangement as claimed in Claim 1 or 2, **characterized in that** the measuring arrangement comprises a level sensor (14) or a point level sensor (11) to determine the level or to display a point level of the liquid phase (ϕ₂) that is reached in the measuring tube (5).

4. Measuring arrangement as claimed in one of the previous claims, **characterized in that** the central section (7) of the measuring tube (5) has a gas pipe segment (3), wherein the gas pipe segment (3) is located in an upper section of the measuring tube (5) in the vertical direction L, wherein the gas pipe segment (3) has a greater surface than the channel (4).

5. Measuring arrangement as claimed in one of the previous claims, **characterized in that** the measuring tube (5) can be connected at each end to a process pipe, preferably by means of a flange connection.

6. Measuring arrangement as claimed in one of the previous claims, **characterized in that** the measuring arrangement has
at least one sensor element (9A, 15A), wherein said element is arranged in an upper section of the measuring tube (5) for the purpose of determining the flow velocity of the gas;
at least one sensor element, wherein said element is arranged in a lower section of the measuring tube for the purpose of determining the flow velocity of the liquid;
a sensor element, which is provided to determine the level of the at least one liquid in the measuring tube and
an evaluation unit which determines the flow of the at least two individual phases and which is connected to the sensor elements.

7. Measuring arrangement as claimed in one of the previous claims, **characterized in that**, when installed, the measuring tube has an orientation in which the inflow section and the outflow section are essentially arranged at the same height in relation to the force of gravity.

8. Measuring arrangement as claimed in one of the previous claims, **characterized in that** a straight connection line extends horizontally between the points of intersection of the measuring tube center line with a front face of the measuring tube at the inflow section and a front face of the measuring tube at the outflow section or does not deviate by more than 20°, particularly by not more than 10°, from the horizontal.

## Revendications

1. Dispositif de mesure destiné à la détermination de la vitesse d'écoulement d'au moins une phase liquide (ϕ₂) et/ou d'une phase gazeuse (ϕ₁) d'une vapeur ou d'un fluide constitué d'une phase liquide et d'une phase gazeuse ou d'un fluide supercritique,
le dispositif de mesure comprenant un tube de mesure (5) sur ou dans lequel au moins un élément capteur (10A, 15A) d'au moins un premier débitmètre (10, 15), en vue de la détermination de la phase liquide (ϕ₂) ou de la phase gazeuse (ϕ₁), le tube de mesure (5) présentant au moins une zone d'entrée (1) et une zone de sortie (2), une zone centrale (7) étant disposée entre ces deux zones, zone centrale dont la section transversale du tube de mesure présente une surface supérieure à la surface de la section transversale du tube de mesure de la zone de sortie (2) ou de la zone d'entrée (1),
la section transversale du tube de mesure augmentant de manière continue vers la zone centrale dans une première zone de transfert (6) entre la zone d'entrée et la zone centrale ainsi que dans une deuxième zone de transfert (8) entre la zone de sortie et la zone centrale,
l'élément capteur étant disposé dans la zone centrale (7),
**caractérisé en ce que**
la zone centrale (7) du tube de mesure (5) présente un canal de caniveau (4) destiné à collecter la phase liquide (ϕ₂).

2. Dispositif de mesure selon la revendication 1, **caractérisé en ce que** sur ou dans le tube de mesure (5) se trouve au moins un autre élément capteur (9A, 16A) du premier débitmètre (15) ou d'un autre débitmètre (9), de sorte que la vitesse d'écoulement de la phase liquide (ϕ₂) ou de la phase gazeuse (ϕ₁) peut être déterminée par le dispositif de mesure.

3. Dispositif de mesure selon la revendication 1 ou 2, **caractérisé en ce que** le dispositif de mesure comprend un capteur de niveau (14) ou un détecteur de seuil (11) pour la détermination du niveau ou pour l'indication d'un seuil atteint de la phase liquide (ϕ₂) dans le tube de mesure (5).

4. Dispositif de mesure selon l'une des revendications précédentes, **caractérisé en ce que** la zone centrale (7) du tube de mesure (5) présente un segment de tube de gaz (3), le segment de tube de gaz (3) se trouvant dans une zone supérieure du tube de mesure (5) dans la direction perpendiculaire L, le segment de tube de gaz (3) présentant une superficie supérieure à celle du canal de caniveau (4).

5. Dispositif de mesure selon l'une des revendications précédentes, **caractérisé en ce que** le tube de mesure (5) peut être raccordé à chaque extrémité à une conduite de process, de préférence au moyen d'un raccord à bride.

6. Dispositif de mesure selon l'une des revendications précédentes, **caractérisé en ce que** le dispositif de mesure présente
au moins un élément capteur (9A, 15A), lequel élément est disposé dans une zone supérieure du tube de mesure (5) en vue de déterminer la vitesse d'écoulement du gaz ;
au moins un élément capteur, lequel élément est disposé dans une zone inférieure du tube de mesure en vue de déterminer la vitesse d'écoulement du liquide ;
un élément capteur, lequel élément est prévu pour déterminer le niveau de l'au moins un liquide dans le tube de mesure et
une unité d'exploitation, laquelle unité détermine le débit des au moins deux phases individuelles et qui est reliée aux éléments capteurs.

7. Dispositif de mesure selon l'une des revendications précédentes, **caractérisé en ce que** le tube de mesure présente, à l'état monté, une orientation dans laquelle la zone d'entrée et la zone de sortie sont disposées pour l'essentiel à la même hauteur par rapport à la force de gravité.

8. Dispositif de mesure selon l'une des revendications précédentes, **caractérisé en ce qu'**une ligne de jonction droite entre les points d'intersection de la ligne médiane du tube de mesure avec une surface frontale du tube de mesure au niveau de la zone d'entrée et une surface frontale du tube de mesure au niveau de la zone de sortie est horizontale ou s'écarte de l'horizontale au maximum de 20°, notamment au maximum de 10°.
